# FASCICULE DE BREVET EUROPEEN

(11) **EP 3 020 311 B1**
(45) Date de publication et mention de la délivrance du brevet: **02.08.2017**
(21) Numéro de dépôt: 15194307.3
(22) Date de dépôt: 12.11.2015
(51) Int. Cl.: A47J 27/08

(54) **SYSTÈME DE CUISSON SOUS PRESSION EQUIPÉ D'UN DISPOSITIF DE COLLECTE DE DONNÉES**
DRUCKKOCHSYSTEM, DAS MIT EINER DATENERHEBUNGSVORRICHTUNG AUSGESTATTET IST
PRESSURE COOKING SYSTEM PROVIDED WITH A DATA COLLECTION DEVICE

(30) Priorité: 13.11.2014 FR 1460967
(43) Date de publication de la demande: 18.05.2016
(73) Titulaire: SEB S.A., 69130 Ecully (FR)
(72) Inventeur: BARAILLE, Eric, Laurent, 21121 FONTAINE-LES-DIJON (FR); ABERBACHE, Belkacem, 74150 RUMILLY (FR); MORTIER, Bruno, Paul, Albert, 69720 SAINT LAURENT DE MURE (FR); HOUNI, Karim, 69007 LYON (FR); DECROZE, Nicolas, 69007 LYON (FR)
(74) Mandataire: Soares, Luis Filipe

(56) Documents cités:
- DE-U1-202011 003 293
- FR-A1- 2 931 648
- US-B1- 6 283 014

## Description

La présente invention se rapporte au domaine technique général des ustensiles de cuisine du type récipient de cuisson, et plus précisément au secteur des autocuiseurs, c'est-à-dire des marmites de cuisson sous pression destinées à assurer la cuisson sous pression de vapeur d'aliments contenus en leur sein.

La présente invention concerne plus particulièrement un système de cuisson sous pression comprenant au moins un appareil de cuisson sous pression équipé d'un dispositif de collecte de données embarqué sur ledit appareil de cuisson sous pression et conçu pour collecter, lors de l'utilisation de l'appareil de cuisson sous pression, des données représentatives du fonctionnement dudit appareil de cuisson sous pression.

Les autocuiseurs domestiques sont bien connus. Ils se composent habituellement d'une cuve métallique destinée à cuire les aliments et d'un couvercle, métallique lui aussi, destiné à être rapporté et verrouillé sur la cuve pour former avec cette dernière, par l'intermédiaire d'un joint d'étanchéité annulaire en matériau élastomère, une enceinte de cuisson étanche, capable de monter en pression. Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

Le fonctionnement de ces autocuiseurs connus est gouverné par différents organes, tels que par exemple :
- un moyen de verrouillage/déverrouillage capable d'assurer le verrouillage et le déverrouillage du couvercle relativement à la cuve,
- une soupape de régulation de pression permettant de maintenir la pression dans l'enceinte à un niveau prédéterminé de consigne (éventuellement réglable s'il s'agit d'une soupape tarée à tarage réglable) appelée pression de fonctionnement,
- un organe de décompression, permettant de faire chuter la pression au sein de l'enceinte, notamment en fin de processus de cuisson, pour que l'utilisateur puisse ouvrir le couvercle dans des conditions de sécurité acceptables,
- différents organes de sécurité à la surpression (soupape de sécurité, dispositif de fuite au joint...),
- dispositif de minutage, amovible ou non, permettant de surveiller le temps de cuisson, en particulier la durée de cuisson sous pression...

Un autocuiseur est donc un appareil relativement sophistiqué, qui de ce fait peut être difficile à utiliser de manière optimale, du moins par certains utilisateurs.

Une telle utilisation non optimale peut recouvrir différentes situations, comme par exemple l'une ou l'autre des situations suivantes :
- l'utilisateur n'adapte pas la puissance de sa source de chauffe au cours du processus de cuisson ;
- l'utilisateur règle le tarage de la soupape de régulation à un niveau qui n'est pas adapté à la recette qu'il est en train d'exécuter ;
- les temps de cuisson sont inadaptés ;
- le moyen de verrouillage/déverrouillage est manipulé de façon incorrecte.

Ces pratiques non optimales peuvent également provenir d'habitudes prises par les utilisateurs au fil des années, des générations, sans tenir compte des évolutions de conception des autocuiseurs et des progrès techniques correspondants. Cet usage imparfait des autocuiseurs peut bien entendu conduire à un résultat décevant, que ce soit par exemple en termes de saveur des aliments cuits, de durée de cuisson, ou de puissance consommée, sans que l'utilisateur ne puisse pour autant identifier clairement la cause de cette divergence entre le résultat et la performance attendus d'une part et le résultat et la performance effectivement obtenus d'autre part.

De ce point de vue, les autocuiseurs connus peuvent donc ne pas toujours donner entière satisfaction à une partie (qui peut être significative) de leurs utilisateurs, voire même à placer certains d'entre eux dans des situations risquées.

Un constat similaire peut être établi en ce qui concerne l'entretien et la maintenance des autocuiseurs. Les autocuiseurs sont en effet des appareils qui sont soumis à des conditions d'utilisation particulièrement contraignantes, avec la présence d'un milieu humide, avec des températures et pressions élevées. Il est donc essentiel, en particulier sur le plan de la sécurité d'utilisation, que l'ensemble des pièces et organes composant l'autocuiseur soient toujours opérationnels et en bon état, afin de garantir non seulement un fonctionnement optimal, mais également un niveau de sécurité suffisant.

Cela suppose par exemple que certaines pièces (tel que le joint d'étanchéité) soient remplacées avant d'être trop usées et que certains organes (soupape de sécurité à la surpression par exemple) soient actionnés périodiquement pour vérifier leur bon fonctionnement et dégripper éventuellement à cette occasion le mécanisme concerné.

Il est connu du document DE 202011003293U de surveiller les cycles d'utilisation et le vieillissement des pièces et organes de l'autocuiseur. Il s'avère toutefois en pratique difficile de mettre en place, dans le cadre domestique et familial d'utilisation des autocuiseurs, une procédure optimale en matière d'entretien et de maintenance, en raison du caractère contraignant et fastidieux d'une telle démarche de surveillance et de maintenance.

Ceci a pour conséquence pratique que les opérations d'entretien et de maintenance sont trop souvent négligées par les utilisateurs, qui omettent en particulier de remplacer en temps utile le joint d'étanchéité de leur autocuiseur. De manière générale, beaucoup d'utilisateurs ignorent d'ailleurs qu'il faut procéder à de telles opérations de maintenance et ne savent de toute façon pas en quoi consistent les opérations de maintenance en question. Ces lacunes en matière de maintenance et d'entretien peuvent bien entendu conduire à un fonctionnement dégradé de l'autocuiseur, voire même, dans certaines situations extrêmes, à un risque éventuel pour l'utilisateur.

Les objets assignés à l'invention visent en conséquence à porter remède aux différents inconvénients énumérés précédemment et à proposer un nouveau système de cuisson sous pression comprenant un appareil de cuisson sous pression, dont la conception est de nature à aider l'utilisateur à mieux utiliser ledit appareil de cuisson pression et/ou à faciliter les opérations de maintenance et d'entretien dudit appareil.

Un autre objet de l'invention vise à proposer un nouveau système de cuisson sous pression comprenant un appareil de cuisson sous pression, qui permet d'accéder de façon simple, rapide et discrète à des données représentatives du fonctionnement de l'appareil de cuisson sous pression.

Un autre objet de l'invention vise à proposer un nouveau système de cuisson sous pression comprenant au moins un appareil de cuisson sous pression qui permet de surveiller, avec précision et en permanence, le fonctionnement de l'appareil de cuisson sous pression, et ce, de manière autonome et fiable.

Un autre objet de l'invention vise à proposer un nouveau système de cuisson sous pression comprenant un appareil de cuisson sous pression, dont la conception permet d'aider simplement et efficacement l'utilisateur à mieux utiliser l'appareil de cuisson sous pression et à mieux l'entretenir.

Un autre objet de l'invention vise à proposer un nouveau système de cuisson sous pression comprenant un appareil de cuisson sous pression, qui permet de fournir une information susceptible d'aider à l'amélioration de la conception de l'appareil de cuisson sous pression.

Un autre objet de l'invention vise à proposer un nouveau système de cuisson sous pression comprenant au moins un appareil de cuisson sous pression qui, tout en étant capable d'assister l'utilisateur à partir d'une analyse fine de l'utilisation effective de l'appareil de cuisson par l'utilisateur, présente une construction compacte et bon marché, facile à mettre en oeuvre.

Les objets assignés à l'invention sont atteints à l'aide d'un système de cuisson sous pression comprenant au moins un appareil de cuisson sous pression équipé d'un dispositif de collecte de données embarqué sur ledit appareil de cuisson sous pression et conçu pour collecter, lors de l'utilisation de l'appareil de cuisson sous pression, des données représentatives du fonctionnement dudit appareil de cuisson sous pression, caractérisé en ce qu'il comprend également, embarqués sur ledit appareil de cuisson sous pression :
▪ une mémoire non volatile conçue pour stocker des informations incluant lesdites données collectées par ledit dispositif de collecte de données et/ou des données calculées à partir desdites données collectées,
▪ un émetteur conçu pour assurer le transfert desdites informations stockées dans ladite mémoire à un dispositif de traitement distant,
▪ un moyen de contrôle dudit émetteur conçu pour déclencher automatiquement ledit transfert desdites informations à des moments prédéterminés et/ou en réponse à une action de commande d'un utilisateur.

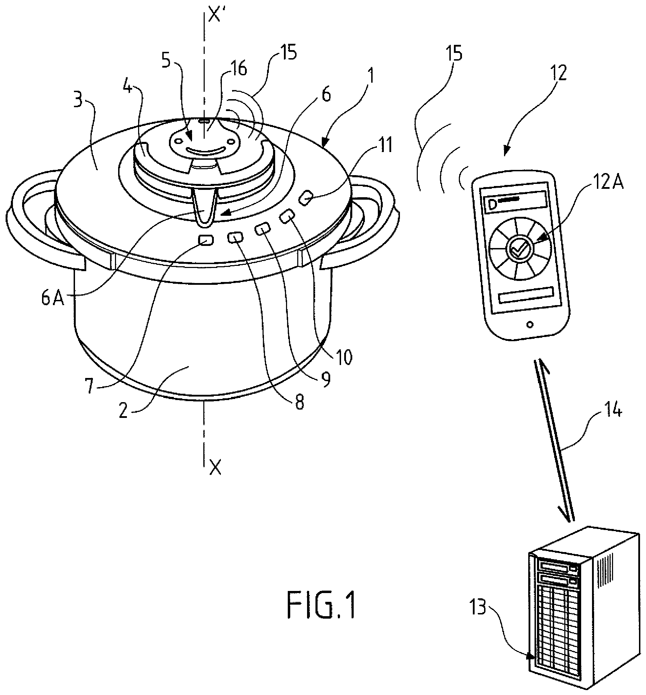

D'autres particularités et avantages de l'invention apparaîtront et ressortiront plus en détails à la lecture de la description faite ci-après, en référence aux dessins annexés donnés à titre d'exemples illustratifs et non limitatifs, dans lequel la figure 1 illustre, selon une schématique, un système de cuisson sous pression selon l'invention comprenant un appareil de cuisson sous pression équipé d'une mémoire non volatile et d'un émetteur, un terminal informatique indépendant en communication sans fil avec l'émetteur, et un serveur distant en communication avec le terminal informatique indépendant, en l'espèce par l'intermédiaire du réseau Internet.

L'invention concerne un système de cuisson sous pression comprenant au moins un appareil de cuisson sous pression 1, qui est destiné, en l'espèce, à assurer la cuisson d'aliments sous pression de vapeur. L'appareil de cuisson sous pression 1 forme donc un autocuiseur, et de préférence un autocuiseur domestique, ce qui suppose en particulier qu'il présente un caractère portatif (c'est-à-dire déplaçable manuellement) et indépendant. Avantageusement, l'appareil de cuisson sous pression 1 est passif thermiquement, c'est-à-dire qu'il est conçu pour monter en pression sous l'effet d'une source de chauffe qui lui est extérieure, telle qu'une plaque de cuisson. Il est cependant tout à fait envisageable, sans pour autant que l'on sorte du cadre de l'invention, que la source de chauffe fasse partie de l'appareil de cuisson sous pression 1 (cas d'un autocuiseur électrique par exemple).

Comme cela est bien connu en tant que tel, l'appareil de cuisson sous pression 1 du système selon l'invention comprend une cuve 2 formant un récipient de cuisson et présentant avantageusement et sensiblement une symétrie de révolution selon un axe vertical central X-X'. Par exemple, la cuve 2 est de manière classique fabriquée par emboutissage d'un flan métallique (en aluminium ou acier inoxydable par exemple). Un fond thermo-conducteur peut avantageusement être rapporté, par exemple par frappe à chaud, sur le fond du récipient obtenu par emboutissage. L'appareil de cuisson sous pression 1 du système selon l'invention comprend également un couvercle 3 destiné à être rapporté sur la cuve 2 pour former avec cette dernière, par l'intermédiaire d'un joint d'étanchéité annulaire (réalisée par exemple en matériau élastomère), une enceinte de cuisson sensiblement étanche, c'est-à-dire suffisamment hermétique pour permettre une montée en pression significative en son sein, par exemple à un niveau excédant la pression atmosphérique d'une valeur comprise entre 4 kPa et 150 kPa. Le couvercle 3 est avantageusement réalisé en un matériau métallique (par exemple en acier inoxydable) et affecte préférentiellement une forme générale discoïde, complémentaire de la forme de la cuve 2 à laquelle il est associé pour former l'enceinte de cuisson. Le couvercle 3 est conçu pour être verrouillé/déverrouillé à volonté relativement à la cuve 2, le verrouillage du couvercle 3 permettant à l'enceinte de monter en pression sans échappement du couvercle 3 sous l'effet de la montée en pression au sein de l'appareil de cuisson sous pression 1. À cette fin, l'appareil de cuisson sous pression 1 comprend avantageusement un moyen de verrouillage/déverrouillage du couvercle 3 sur la cuve 2, qui peut être en l'espèce de tout type connu dans le domaine (système de verrouillage à étrier, à baïonnettes, à mâchoires, à segments, etc.). Le moyen de verrouillage/déverrouillage peut de façon classique être susceptible d'évoluer entre une configuration de verrouillage du couvercle 3 relativement à la cuve 2 dans laquelle le couvercle 3 est attaché à la cuve 2 de façon à autoriser la montée en pression, et une configuration de déverrouillage du couvercle 3 relativement la cuve 2 dans laquelle le couvercle 3 peut être librement séparé de la cuve 2, de façon manuelle par un utilisateur. Dans l'exemple illustré à la figure, le moyen de verrouillage/déverrouillage comprend une paire de mâchoires montées à translation sur le couvercle 3 entre une position rétractée de verrouillage (illustrée à la figure 1) et une position expansée de déverrouillage, le déplacement des mâchoires étant contrôlé par une poignée de commande manuelle 4 montée mobile entre une position rabattue correspondant au verrouillage (illustrée la figure 1) et une position déployée (non illustrée) correspondant au déverrouillage.

Une telle conception est connue en particulier des documents EP-2 204 111 et EP-2 204 112, dont le contenu est incorporé par référence. De préférence, l'appareil de cuisson d'aliments sous pression 1 est pourvu d'une soupape de régulation de pression, conçu pour maintenir la pression régnant au sein dudit appareil 1 à une valeur de consigne appelée pression de fonctionnement. De préférence, ladite soupape de régulation de pression est une soupape de régulation de pression tarée à tarage réglable, de sorte que ledit niveau de consigne est réglable par réglage du tarage. De préférence, l'appareil de cuisson d'aliments sous pression 1 comprend par ailleurs un organe de décompression, permettant à l'utilisateur de faire chuter la pression au sein de l'enceinte de cuisson, notamment en fin de processus de cuisson, pour que l'utilisateur puisse ouvrir le couvercle 3 dans des conditions de sécurité acceptables. Avantageusement, l'appareil de cuisson sous pression 1 est pourvu d'au moins un organe de commande manuel 6, mobile entre une pluralité de positions correspondant respectivement à une pluralité d'états de fonctionnement de l'appareil de cuisson sous pression 1. En d'autres termes, l'organe de commande manuel 6 permet à l'utilisateur de piloter une ou plusieurs des fonctions de l'appareil de cuisson sous pression 1, comme par exemple, à titre purement illustratif et non limitatif, la décompression de l'enceinte de cuisson et/ou le réglage de la pression de fonctionnement (réglage du tarage de la soupape de régulation taré à tarage réglable dont est de préférence pourvu l'appareil de cuisson d'aliments sous pression 1). Dans l'exemple illustré, l'organe de commande manuel 6 se présente sous la forme d'un curseur 6A monté à rotation, en l'espèce selon l'axe vertical central X-X', pour se déplacer entre différentes positions prédéterminées associées chacune à des marquages d'identification 7, 8, 9, 10, 11 respectifs, positionnés sur l'appareil de cuisson sous pression 1, par exemple à la surface du couvercle 3 (de façon à être parfaitement visible par l'utilisateur) selon une disposition prédéterminée. A chacune desdites positions correspond une fonctionnalité spécifique et les marquages d'identification 7, 8, 9, 10,11 sont conçus pour permettre à l'utilisateur d'identifier quelle fonctionnalité est associée à chaque position indexée du curseur 6A formant en l'espèce l'organe de commande manuel 6. Par exemple, le premier marquage d'identification 7 correspond à l'activation de la décompression de l'appareil, tandis que les deuxième, troisième, quatrième et cinquième marquages d'identification 8, 9, 10, 11 correspondent respectivement à quatre valeurs de consignes de pression de fonctionnement (c'est-à-dire quatre niveaux de tarage de la soupape de régulation) différents, adaptés à différents types d'aliments (par exemple : légumes, féculents, viandes et poissons). Ainsi, lorsque le curseur 6A formant l'organe de commande manuel 6 mobile pointe vers le marquage d'identification 7, la décompression de l'appareil de cuisson d'aliments sous pression est commandée, de sorte que l'intérieur de l'enceinte de cuisson est mis en communication avec l'extérieur pour faire chuter la pression régnant dans l'enceinte et la ramener à la pression atmosphérique. Au contraire, lorsque le curseur 6A pointe vers l'un ou l'autre des deuxième, troisième, quatrième ou cinquième marquage d'identification 8, 9, 10, 11, l'appareil de cuisson sous pression est alors placé en configuration de cuisson sous pression, c'est à dire que l'enceinte de cuisson est fermée de façon étanche de sorte que l'intérieur de l'enceinte ne peut communiquer avec l'extérieur que par l'intermédiaire de la soupape de régulation dont le tarage (dont dépend la valeur de consigne de la pression de fonctionnement) est réglé à un niveau prédéterminé associé à la position prédéterminée du curseur formant l'organe de commande manuel 6.

L'appareil de cuisson sous pression 1 est par ailleurs équipé d'un dispositif de collecte de données 5 conçu pour collecter, lors de l'utilisation de l'appareil de cuisson sous pression 1, des données représentatives du fonctionnement dudit appareil de cuisson sous pression 1. Le dispositif de collecte de données est embarqué, de façon amovible ou permanente, sur l'appareil de cuisson sous pression 1, c'est-à-dire qu'il est attaché à ce dernier, et est par exemple monté sur le couvercle 3. L'expression « *données représentatives du fonctionnement de l'appareil de cuisson sous pression* » désigne ici des données, et en particulier des données quantifiables, de préférence sous la forme de valeurs numériques d'un ou plusieurs paramètres (pression, température, durée...) relatifs au fonctionnement de l'appareil de cuisson sous pression 1. Le dispositif de collecte de données est donc pourvu de moyens techniques adaptés, tels que des capteurs, des détecteurs et des moyens de mesure et de traitement lui permettant de collecter lesdites données alors que l'appareil de cuisson sous pression 1 est en cours d'utilisation, et est, par exemple, soumis un apport thermique en provenance d'une source de chauffe (plaque de cuisson).

De préférence, la position instantanée de l'organe de commande manuel 6 fait partie des données collectées par le dispositif de collecte de données. En d'autres termes, dans ce mode de réalisation préférentiel, le dispositif de collecte de données 5 est conçu pour surveiller en permanence la position de l'organe de commande manuel 6 et est capable de déterminer en temps réel (par exemple au moyen de capteurs de position, par exemple de type C-MOS destinés à être excités par un aimant embarqué dans l'organe de commande manuel 6, conformément à l'enseignement du document WO-2010/081994 dont le contenu est incorporé par référence) dans quelle position prédéterminée se trouve l'organe de commande manuelle 6.

Avantageusement, l'appareil de cuisson sous pression 1 inclut un dispositif de détection de l'instant où débute la cuisson à la valeur de consigne de pression. De préférence, le dispositif de détection de l'instant où débute l'étape de cuisson sous pression inclut au moins d'une part un capteur de pression et/ou de température permettant de mesurer respectivement le niveau de pression et/ou de température régnant au sein de appareil de cuisson 1 (c'est-à-dire au sein de l'enceinte de cuisson formée par l'association de la cuve 2 et du couvercle 3) et d'autre part des moyens de calculs permettant de déterminer automatiquement, à partir desdits niveaux de pression et/ou de température mesurées, ledit instant où débute l'étape de cuisson sous pression. De préférence, le dispositif de détection est conçu pour détecter l'instant ou la pression régnant dans l'autocuiseur atteint pour la première fois la valeur de consigne sélectionnée par l'utilisateur (en l'espèce au moyen de l'organe de commande 6), l'instant en question marquant donc le début de l'étape de cuisson sous pression. De préférence, le dispositif de détection est conçu dans ce cas pour fonctionner selon le principe décrit dans le document EP-1 458 270, dont le contenu est incorporé par référence. Dans ce mode de réalisation préférentiel, le dispositif de détection inclut un capteur de température avantageusement disposé dans un, ou au voisinage d'un, conduit d'échappement de vapeur disposé à l'aval de la soupape de régulation de pression, pour permettre audit capteur de température de capter l'augmentation de température résultant de l'échappement de vapeur à travers le conduit, et de produire en réponse un signal de déclenchement.

De préférence, le système de cuisson sous pression comprend un minuteur conçu pour décompter une durée prédéterminée à partir de l'instant où débute l'étape de cuisson sous pression à la pression de fonctionnement sélectionnée par l'utilisateur au moyen de l'organe de commande manuel 6. Le minuteur est avantageusement connecté au dispositif de détection de façon à déclencher le décompte de la durée prédéterminée en réponse à l'émission dudit signal de déclenchement. Ledit minuteur peut par exemple être embarqué, de façon amovible ou permanente, sur l'appareil de cuisson sous pression 1, ou au contraire être distinct et indépendant de l'appareil de cuisson sous pression 1 (tout en étant relié fonctionnellement à ce dernier, par exemple, par l'intermédiaire d'une liaison sans fil). Comme évoqué précédemment, le signal de déclenchement précité est conçu pour être immédiatement transmis au minuteur, lequel déclenche en retour, à réception du signal de déclenchement, un décompte d'une durée prédéterminée correspondant en l'espèce à une durée souhaitée de cuisson des aliments à la pression de fonctionnement.

Dans le mode de réalisation préférentiel illustré à la figure, le système conforme à l'invention comprend un dispositif d'assistance à l'utilisation de l'appareil de cuisson sous pression 1, préférentiellement conçu pour indiquer à l'utilisateur des consignes d'utilisation de l'appareil de cuisson sous pression 1 (par exemple, le dispositif d'assistance à l'utilisation peut indiquer à l'utilisateur dans quelle position doit être placé l'organe de commande manuel 6 en fonction de la recette que l'utilisateur souhaite mettre en oeuvre au moyen de l'appareil de cuisson sous pression 1). De préférence, le dispositif d'assistance à l'utilisation de l'appareil de cuisson sous pression 1 comprend une application destinée à être exécutée par un terminal distant 12, dont dispose en l'espèce un utilisateur de l'appareil de cuisson sous pression 1. Le terminal distant 12 est de préférence totalement distinct et indépendant de l'appareil de cuisson sous pression 1. Il présente avantageusement un caractère portatif et est de préférence conçu pour pouvoir être transporté et manipulé à une ou deux mains par l'utilisateur. De préférence, le terminal distant 12 est constitué par un ordiphone (en anglais « *smartphone* »), une tablette tactile (du genre Apple iPad®) ou un ordinateur portable, avantageusement équipé de la technologie de télécommunication Bluetooth®, et en particulier de la technologie Bluetooth 4.0 *« low energy* »®, Par « *application* » on désigne ici un logiciel applicatif, qui est en l'occurrence destiné à procurer, lorsqu'il est exécuté par le terminal distant 12, une assistance à l'utilisation de l'appareil de cuisson sous pression 1, en produisant des « *consignes* », c'est-à-dire par exemple des informations d'assistance à l'utilisation de toute nature (sonore et/ou visuelle, interactive ou non) afin de guider par exemple l'utilisateur dans son utilisation de l'appareil électroménager 1, de préférence en temps réel, à la manière d'un « *coach* » virtuel. De préférence, le terminal distant 12 est pourvu d'un écran d'affichage 12A et avantageusement de haut-parleurs permettant de communiquer à l'utilisateur, de façon visuelle et/ou sonore, les informations d'assistance à l'utilisation. De préférence, le terminal distant 12 est relié, par l'intermédiaire d'une connexion sans fil 15, à l'appareil de cuisson sous pression 1, de manière à pouvoir instaurer un échange de données entre l'appareil de cuisson sous pression et le terminal distant 12. La connexion sans fil 15 est de préférence une connexion par ondes électromagnétiques, et de préférence par ondes radioélectriques, infrarouge ou autre, autorisant (sans liaison physique du genre fil ou câble entre le terminal 12 et un émetteur) un transfert de données analogiques et/ou numériques entre un émetteur et le terminal 12. De façon préférentielle la liaison 15 entre l'émetteur et le terminal informatique 12 est conforme à la norme « *Bluetooth 4.0 low energy* »®*.* Cela signifie bien entendu que dans ce cas préférentiel, à la fois l'émetteur et le terminal distant 12 embarquent des moyens de télécommunications qui reposent sur la technologie Bluetooth® pour réaliser une communication sans contact ni liaison filaire entre le terminal 12 et l'émetteur. De préférence, cette communication est bidirectionnelle, auquel cas l'émetteur est complété d'un récepteur tandis que le terminal 12 est également pourvu de moyens d'émission/réception, permettant ainsi un transfert bidirectionnel de données numériques ou analogiques entre le terminal 12 et l'émetteur/récepteur embarqué sur l'appareil de cuisson sous pression 1.

Dans ce mode de réalisation avantageux mettant en oeuvre un dispositif d'assistance à l'utilisation, le minuteur susvisé fait avantageusement partie dudit dispositif d'assistance à l'utilisation, et constitue de préférence un minuteur « *virtuel* », c'est-à-dire que l'application exécutée par le terminal 12 assure elle-même une fonction de minutage. Par exemple, le signal de déclenchement précité produit lorsque le capteur de température capte l'augmentation de température résultant de l'échappement de vapeur à travers le conduit d'échappement est conçu pour être communiqué, via la connexion sans fil 15, à l'application, laquelle est avantageusement conçue pour déclencher en réponse, à réception du signal de déclenchement en provenance de l'appareil de cuisson sous pression 1, un décompte d'une durée prédéterminée correspondant en l'espèce à une durée souhaitée de cuisson des aliments à pression de fonctionnement.

Cette durée prédéterminée est avantageusement programmée directement par l'utilisateur, par exemple via une interface appropriée pilotée par l'application et affichée sur l'écran 12A du terminal 12, ou/et programmée automatiquement par le système, en réponse à la sélection par l'utilisateur, au moyen par exemple d'une interface appropriée affichée sur l'écran 12A du terminal 12, d'une recette particulière à laquelle correspond une durée de cuisson sous pression prédéterminée. Bien entendu, il est également parfaitement envisageable que le minuteur soit formé par une unité de minutage directement embarquée (de manière amovible ou permanente) sur l'appareil de cuisson sous pression 1, en complément, ou à la place du minuteur virtuel décrit précédemment.

De préférence, les données collectées par le dispositif de collecte incluent la durée de cuisson effectuée à la pression de fonctionnement.

De préférence, les données collectées par le dispositif de collecte incluent également la durée s'écoulant entre le début de l'utilisation de l'appareil de cuisson sous pression 1 et l'instant où la pression de fonctionnement est atteinte, cette durée étant, par exemple, mesurée grâce au minuteur précité, ou à tout autre dispositif chronométrique.

Conformément à l'invention, le système de cuisson sous pression comprend également, embarqué (de façon amovible ou permanente) sur ledit appareil de cuisson sous pression 1 (par exemple sur le couvercle 3), une mémoire non volatile. Par « *mémoire non volatile* » on désigne notamment une mémoire informatique « *morte* », capable de conserver les données qu'elle stocke même en l'absence d'alimentation en électricité. Ladite mémoire est conçue pour stocker des informations incluant lesdites données collectées par le dispositif de collecte de données et/ou des données calculées à partir desdites données collectées. De préférence, le système comprend à cet effet un dispositif de calcul permettant d'obtenir lesdites données calculées, par traitement mathématique des données collectées, lesdites données calculées étant destinées à être stockées par la mémoire non volatile comme évoqué précédemment. De préférence, le dispositif de calcul, est lui aussi embarqué, de manière amovible ou permanente, sur l'appareil de cuisson sous pression 1. Avantageusement, lesdites données collectées ou calculées sont des données brutes représentatives du fonctionnement dudit appareil de cuisson sous pression. En d'autres termes, ces données n'ont pas fait l'objet de traitements ou d'analyses complexes (statistique par exemple), et sont soit des données récoltées brutes soit des données calculées résultant préférentiellement de calculs simples (addition, soustraction, etc.) effectués sur des données récoltées brutes.

Le système de cuisson sous pression selon l'invention comprend également un émetteur conçu pour assurer le transfert des informations stockées dans ladite mémoire non volatile à un dispositif de traitement distant 13, lequel peut, par exemple, se présenter sous la forme d'un serveur informatique ou d'une pluralité de serveurs informatiques exécutant des applications dédiées au traitement desdites informations. Le terminal 12 peut être éventuellement considéré comme faisant partie dudit dispositif de traitement 13. Ainsi, le traitement, l'analyse ou encore la compilation des données brutes (récoltées ou calculées), est préférentiellement effectué par un dispositif de traitement distant 13 plutôt qu'au sein de l'appareil de cuisson sous pression 1 lui-même. En d'autres termes c'est bien le dispositif de traitement distant qui est préférentiellement destiné à assurer la compilation et/ou le traitement desdites informations. Avantageusement, le système de cuisson sous pression comprend ledit dispositif de traitement distant 13.

Dans l'exemple illustré à la figure, l'émetteur est formé par un boîtier électronique embarqué, de manière permanente ou amovible, sur l'appareil de cuisson sous pression 1 et est conçu pour communiquer avec un terminal indépendant, en l'espèce le terminal distant 12, par une connexion sans fil, comme par exemple une connexion sans fil fonctionnant selon le protocole Bluetooth 4.0 « *low energy* »®*.* Les informations peuvent ainsi être transférées par l'émetteur au terminal distant 12, lequel est avantageusement conçu pour les re-transférer, par exemple via une liaison internet 14, au dispositif de traitement distant 13.

Afin de piloter le transfert, grâce audit émetteur, desdites informations stockées dans la mémoire non volatile au dispositif de traitement distant 13, le système de cuisson sous pression selon l'invention comprend également, embarqué (de manière permanente ou amovible) sur ledit appareil de cuisson sous pression 1, un moyen de contrôle dudit émetteur conçu pour déclencher automatiquement le transfert desdites informations à des moments prédéterminés et/ou en réponse à une action de commande d'un utilisateur. En d'autres termes le moyen de contrôle peut assurer le transfert des informations en tâche de fond, de manière masquée pour l'utilisateur, ou au contraire, en réponse à une commande positive d'un utilisateur qui souhaite effectuer à un instant donné ledit transfert. Le moyen de contrôle peut par exemple être placé sous la dépendance de l'application d'assistance à l'utilisation exécuté par le terminal distant 12. Dans un mode de réalisation préférentiel, à chaque mise en route de l'application, cette dernière envoie un signal de commande au moyen de contrôle, par l'intermédiaire de la connexion sans fil 15 reliant le terminal distant 12 à l'appareil de cuisson sous pression 1, la réception dudit signal de commande par le moyen de contrôle entraînant en retour le déclenchement du transfert des informations stockées dans la mémoire non volatile au terminal distant 12, *via* l'émetteur et la connexion sans fil 15. Les informations sont par exemple ensuite retransmises par le terminal 12 distant à un ou plusieurs serveurs formant le dispositif de traitement distant 13, qui en assurera avantageusement la compilation et le traitement anonyme.

Il est également envisageable qu'un mode « *diagnostic* » soit disponible dans l'application, de sorte que sur demande de l'utilisateur (et non pas automatiquement à chaque mise en route de l'application) un signal de commande est envoyé au moyen de contrôle qui en retour déclenche le transfert des informations au terminal distant 12. Le terminal distant 12 et l'application exécutée par ce dernier peuvent avantageusement dans ce cas, traiter les informations reçues pour pouvoir les présenter de manière intelligible à l'utilisateur. De ce point de vue, on peut considérer que le terminal distant 12 fait lui aussi partie, avec les serveurs distants, du dispositif de traitement distant 13.

Avantageusement, le système selon l'invention comprend un module 16 embarqué sur l'appareil de cuisson sous pression 1, ledit module 16 incorporant lui-même ledit dispositif de collecte de données 5, ladite mémoire non volatile, ledit émetteur et ledit moyen de contrôle. De préférence, le module 16 incorpore également le dispositif de calcul qui permet d'obtenir lesdites données calculées. Le module 16 se présente donc de préférence sous la forme d'un sous-ensemble unitaire, monobloc, qui est avantageusement attaché, de façon amovible ou permanente, à l'appareil de cuisson sous pression 1. De préférence, le module 16 peut être attaché à, et détaché de, l'appareil de cuisson sous pression 1, de manière manuelle et à volonté.

Avantageusement, les données calculées obtenues au moyen du dispositif de calcul incluent des données cumulées résultant du cumul de données collectées par le dispositif de collecte à chaque utilisation de l'appareil de cuisson sous pression 1. En d'autres termes, la mémoire non volatile est conçue dans ce cas pour stocker notamment, ou exclusivement, des données qui sont cumulées, de préférence depuis la première utilisation de l'appareil 1.

Dans ce cas, les données collectées incluent avantageusement des valeurs numériques qui sont collectées par le dispositif de collecte à chaque utilisation de l'appareil de cuisson sous pression 1. Les données cumulées sont alors obtenues en ajoutant lesdites valeurs numériques à des valeurs préalablement stockées dans la mémoire non volatile, pour obtenir ainsi des valeurs cumulées que le système est alors conçu pour stocker dans la mémoire non volatile en remplacement desdites valeurs préalablement stockées. Ainsi, le système est capable d'acquérir, de manière autonome, au fil de l'utilisation de l'appareil de cuisson sous pression 1, et plus précisément du module 16, des données dont les valeurs sont ajoutées au cumul des valeurs collectées lors des utilisations précédentes sauvegardé dans la mémoire non volatile (par exemple mémoire morte) du module 16.

Avantageusement, les données cumulées incluent la durée cumulée de cuisson effectuée à la pression de fonctionnement, qui correspond à la somme des durées de cuisson effectuée à la pression de fonctionnement collectées à chaque utilisation de l'appareil de cuisson sous pression 1. Le système permet ainsi avantageusement d'enregistrer, pour chaque valeur de consigne de pression, la durée cumulée de cuisson à la pression de fonctionnement. Ce temps total de cuisson sous pression est avantageusement traité par le dispositif de traitement distant 13, qui le compare par exemple avec une valeur seuil à partir de laquelle il est recommandé par exemple de changer le joint d'étanchéité, dont le vieillissement est corrélé notamment au temps de cuisson sous pression. Le dispositif de traitement distant 13 comprend donc avantageusement une base de données incluant des données de référence ainsi qu'un moyen de traitement (tel qu'un logiciel) conçu pour procéder à une comparaison desdites données collectées et/ou calculées pour chaque appareil de cuisson sous pression 1 avec les données de référence, et le cas échéant générer une alerte qui sera communiquée à l'utilisateur, par exemple sur l'écran 12A du terminal distant 12, pour inviter l'utilisateur à entreprendre une action corrective, et/ou une action de maintenance et/ou une action d'entretien (consistant par exemple à changer le joint d'étanchéité).

Avantageusement, lesdites données cumulées incluent la durée cumulée de cuisson effectuée à la pression de fonctionnement, qui correspond à la somme des durées de cuisson effectuée à la pression de fonctionnement collectées à chaque utilisation de l'appareil de cuisson sous pression 1 et/ou le nombre de séquences de cuisson effectuées à la pression de fonctionnement.

En d'autres termes, la mémoire non volatile stocke, pour chaque niveau de consigne de pression, le nombre de séquences de cuisson qui a été effectué à la pression de fonctionnement correspondante. Ce nombre de séquences de cuisson peut lui aussi être utilisé par le moyen de traitement dont est avantageusement doté le dispositif de traitement distant 13, pour évaluer la nécessité de recourir à d'éventuelles démarches correctives, et/ou d'entretien, et/ou de maintenance qui pourront être signalées à l'utilisateur via le terminal distant 12. Dans le mode de réalisation préférentiel illustré à la figure et décrit dans ce qui précède, ledit nombre de séquences de cuisson correspond au nombre de fois où la pression régnant dans l'appareil de cuisson sous pression 1 a atteint pour la première fois la valeur de consigne sélectionnée. De préférence, le module 16 est conçu pour exécuter automatiquement une opération de contrôle de la température mesurée par le capteur de température du dispositif de détection incorporé au sein dudit module 16. À l'issue de cette opération de contrôle, le module 16 génère avantageusement une variable booléenne appelée par exemple « *détection pente* » et qui est par défaut à l'état « *faux* » et ne passe à l'état « *vrai* » que lorsqu'une variation brusque de ladite température mesurée (supérieure par exemple à x °C/min, où x est une valeur prédéterminée corrélée à l'ouverture de la soupape de régulation) est détectée. Dans ce cas, le nombre de séquences de cuisson effectuées à la pression fonctionnement correspond au nombre de fois où la variable booléenne « *détection pente* » est passée de l'état « *faux* » à l'état « *vrai* »*.*

Avantageusement, les données cumulées incluent le temps total de préchauffage (également appelé temps total d'attente pression), qui correspond à la somme des durées de préchauffage pour chaque cycle de la cuisson. La durée de préchauffage représente la durée qui s'écoule entre le début du cycle d'utilisation de l'appareil de cuisson sous pression 1 (matérialisée par exemple par la mise sous tension du module 16) et la détection de l'ouverture de la soupape de régulation (passage de la variable booléenne « *détection pente* » de l'état « *faux* » à l'état « *vrai* »)*.* L'intérêt de cette donnée cumulée est qu'elle permet d'obtenir, au besoin en étant recoupée avec le nombre de séquences de cuisson précité, après traitement par le dispositif de traitement distant 13, des valeurs représentatives de, ou corrélées à :
- la durée moyenne de cuisson,
- la durée moyenne de montée en pression,
- la position de pression (c'est-à-dire la valeur de consigne de pression) la plus utilisée, qui reflète donc la façon préférentielle dont est utilisé l'appareil de cuisson sous pression 1,
- et, par recoupement avec le temps moyen de montée en pression, un ordre de grandeur de la quantité d'aliments mis en oeuvre et/ou de la puissance de la source de chauffe à laquelle est soumis l'appareil de cuisson sous pression 1.

De préférence, le dispositif de calcul est conçu pour calculer la moyenne des températures à laquelle la variation brusque de température susvisée est détectée, de sorte que la mémoire non volatile stocke une donnée calculée correspondant à cette moyenne de température de détection de pente. Cette donnée calculée peut ensuite, une fois transférée au dispositif de traitement distant 13, être comparée avec des données de référence issues d'essais de référence, pour identifier si l'appareil de cuisson sous pression 1 présente par exemple un problème technique, comme par exemple une fuite ou un dysfonctionnement de la soupape de régulation provoquant une montée rapide en température du capteur de température à des valeurs plus faibles que la normale.

De préférence, lesdites données cumulées stockées par la mémoire non volatile incluent le nombre de fois où la température au sein de l'appareil de cuisson sous pression 1 a dépassé un seuil prédéterminé. Ces données cumulées peuvent en effet renseigner, par corrélation avec des résultats d'essais de référence, quant au nombre de cuissons réalisées avec un produit chaud, c'est-à-dire le nombre de cuissons ayant nécessité plusieurs étapes de cuisson sous pression.

De préférence, les données collectées incluent la durée pendant laquelle la position effective de l'organe de commande manuel 6 ne correspond pas à la position indiquée par le dispositif d'assistance à l'utilisation. Avantageusement, les données cumulées stockées par la mémoire non volatile incluent dans ce cas la durée cumulée pendant laquelle la position effective de l'organe de commande manuel 6 ne correspond pas à la position indiquée par le dispositif d'assistance à l'utilisation. Par exemple, les données cumulées stockées par la mémoire non volatile incluent la durée totale pendant laquelle le réglage du sélecteur de pression (correspondant en l'espèce à l'organe de commande manuel 6) n'a pas été en accord avec la position préconisée par la recette, et indiquée par exemple à l'utilisateur *via* l'application exécutée par le terminal distant 12. Ce « *temps total en mauvaise position* » peut refléter une incompréhension quant à l'utilisation du système par l'utilisateur concerné. Par exemple, lorsque ce temps total en mauvaise position excède une valeur prédéterminée de référence, le système peut offrir à l'utilisateur une assistance technique, par exemple sous la forme de conseils à l'utilisation affichée, par l'application, sur l'écran 12A du terminal 12.

De préférence, le module 16 dispose d'une alimentation électrique autonome, qui lui est procurée par exemple par une ou plusieurs piles disposées dans un compartiment intégré dans le module 16. De préférence, les données cumulées stockées par la mémoire non volatile incluent le nombre de fois où la ou les piles ont dû être changées (nombre de changements de piles). Cette donnée, une fois transférée au dispositif de traitement distant 13, pourra être utilisée par ce dernier pour identifier, éventuellement par recoupement avec le nombre de séquences de cuisson effectuées à la pression de fonctionnement et le temps total de cuisson sous pression, un éventuel problème technique impliquant une surconsommation électrique du module 16.

Avantageusement, ledit dispositif d'assistance à l'utilisation évoqué précédemment comprend, outre ladite application destinée à être exécutée par le terminal distant 12:
- une unité d'acquisition de données qui correspond de préférence au module 16 susvisé, destinée à être embarquée sur l'appareil de cuisson sous pression 1,
- ainsi que des moyens de télécommunication conçus pour établir une connexion sans fil (correspondant en l'espèce à ladite connexion sans fil 15 évoquée précédemment) entre l'application et l'unité d'acquisition de données,
- un moyen de surveillance conçu pour détecter une éventuelle rupture de ladite connexion sans fil 15.

Ladite unité d'acquisition de données est conçue pour fonctionner selon au moins :
- un mode normal, qui est actif tant que le moyen de surveillance ne détecte pas de rupture de la connexion sans fil 15, et selon lequel l'unité d'acquisition de données surveille et/ou récolte et/ou génère un premier jeu de données concernant le fonctionnement de l'appareil de cuisson sous pression 1 qu'elle transmet en partie ou en totalité à l'application, grâce à ladite connexion sans fil 15, afin que ladite application utilise au moins certaines des données dudit premier jeu de données pour son exécution ;
- un mode dégradé, qui est actif tant que ledit moyen de surveillance détecte une rupture de ladite connexion sans fil 15 et/ou un défaut d'exécution de l'application, et selon lequel l'unité d'acquisition de données surveille et/ou récolte et/ou génère un deuxième jeu de données concernant le fonctionnement de l'appareil de cuisson sous pression 1 et utilise de façon autonome au moins certaines desdites données du deuxième jeu de données pour communiquer à l'utilisateur, de façon visuelle et/ou sonore, des informations relatives au fonctionnement de l'appareil de cuisson sous pression 1.

Avantageusement, lesdites données collectées incluent la durée pendant laquelle ladite unité d'acquisition de données a fonctionné en mode dégradé.

De façon préférentielle, lesdites données cumulées stockées dans la mémoire non volatile incluent la durée totale cumulée pendant laquelle l'unité d'acquisition de données a fonctionné en mode dégradé, c'est-à-dire de manière autonome, sans liaison avec le terminal distant 12.

Par exemple, le transfert des informations stockées dans la mémoire non volatile au dispositif de traitement distant 13 s'effectue au moyen d'une trame définie comme suit :

| **Paramètres (X= modèle de l'appareil de cuisson sous pression 1 ; Y= position du curseur 6A)** | **Formats** |
|---|---|
| Cumul de temps précédant la cuisson sous pression pour l'appareil X dont le curseur 6A est en position Y | Octet(s) Tps_avt_ss_pression_X_Y |
| Cumul de temps de cuisson sous pression pour l'appareil X dont le curseur 6A est en position Y | Octet(s) Tps_ss_pression_X_Y |
| Cumul du nombre de cuissons sous pression pour l'appareil X dont le curseur 6A est en position Y | Octet(s) Nbre_cuisson_ss_pression_X_Y |

L'ensemble des informations ainsi obtenues par le dispositif de traitement distant 13, et en particulier les données cumulées visées dans ce qui précède, peut permettre de mieux connaître l'usage qui est fait du système, de placer ce dernier sous surveillance afin en particulier de pouvoir indiquer à l'utilisateur, le cas échéant, la marche à suivre pour ajuster et optimiser le fonctionnement du système.

À cette fin, les informations transmises au dispositif de traitement distant 13 peuvent avantageusement être analysées selon deux modes alternatifs, à savoir :
- par comparaison avec des situations types reproduites en laboratoire ;
- par comparaison avec des valeurs statistiques obtenues par traitement de toutes les données collectées auprès de tous les appareils de cuisson sous pression faisant partie du système par le dispositif de traitement distant 13.

Dans les deux cas, c'est un fonctionnement ou une utilisation « *hors normes* » qui permettra de déceler un éventuel dysfonctionnement et de déclencher avantageusement une alerte ou une prise de contact avec l'utilisateur concerné. Les données de référence incluent donc avantageusement :
- des données statistiques obtenues par un traitement statistique, effectué par le dispositif de traitement distant 13,
- et/ou des données collectées et/ou calculées transférées par chaque appareil de cuisson sous pression 1 faisant partie du système audit dispositif de traitement distant 13.

Ainsi, dans ce mode de réalisation préférentiel, le système comporte un dispositif de traitement distant 13 commun à une pluralité d'appareils de cuisson sous pression 1 conforme à la description qui précède, chaque appareil de cuisson sous pression étant conçu pour communiquer des informations stockées dans sa mémoire non volatile au dispositif de traitement distant 13 qui centralise donc toutes les données et peut les soumettre à des traitements statistiques qui lui permettront par exemple de déterminer des données de référence.

Le dispositif de traitement distant 13 peut ainsi procéder à une comparaison des données collectées et/ou calculées qui lui ont été transmises pour chaque appareil de cuisson sous pression avec des données de références qui sont soient issues de tests en laboratoire, soit issues de traitements statistiques comme exposés ci-avant. En fonction du résultat de la comparaison, le dispositif de traitement distant 13 est avantageusement conçu, pour envoyer, par exemple *via* l'écran 12A du terminal 12, un message informatif à l'utilisateur concerné, par exemple pour inviter l'utilisateur à entreprendre une démarche corrective et/ou d'entretien et/ou de maintenance.

## Revendications

1. Système de cuisson sous pression comprenant au moins un appareil de cuisson sous pression (1) équipé d'un dispositif de collecte de données (5) embarqué sur ledit appareil de cuisson sous pression (1) et conçu pour collecter, lors de l'utilisation de l'appareil de cuisson sous pression (1), des données représentatives du fonctionnement dudit appareil de cuisson sous pression (1) et une mémoire non volatile conçue pour stocker des informations incluant lesdites données collectées par ledit dispositif de collecte de données et/ou des données calculées à partir desdites données collectées, **caractérisé en ce qu'**il comprend également, embarqués sur ledit appareil de cuisson sous pression :
▪ un émetteur pouvant assurer le transfert desdites informations stockées dans ladite mémoire à un dispositif de traitement distant (13) destiné à assurer la compilation et le traitement desdites informations,
▪ un moyen de contrôle dudit émetteur conçu pour déclencher automatiquement ledit transfert desdites informations à des moments prédéterminés et/ou en réponse à une action de commande d'un utilisateur.

2. Système selon la revendication 1 **caractérisé en ce qu'**il comprend un dispositif de calcul permettant d'obtenir lesdites données calculées.

3. Système selon la revendication 1 ou 2 **caractérisé en ce que** lesdites données calculées incluent des données cumulées résultant du cumul de données collectées par le dispositif de collecte à chaque utilisation.

4. Système selon la revendication 3 **caractérisé en ce que** lesdites données collectées incluent des valeurs numériques qui sont collectées par le dispositif de collecte à chaque utilisation de l'appareil de cuisson sous pression (1), lesdites données cumulées étant obtenues en ajoutant lesdites valeurs numériques à des valeurs préalablement stockées dans ladite mémoire non volatile, pour obtenir ainsi des valeurs cumulées que le système est alors conçu pour stocker dans la mémoire non volatile en remplacement desdites valeurs préalablement stockées.

5. Système selon l'une des revendications 1 à 4 **caractérisé en ce que** ledit appareil de cuisson sous pression (1) est pourvu d'une soupape de régulation de pression, conçue pour maintenir la pression régnant au sein dudit appareil (1) à une valeur de consigne appelée pression de fonctionnement, lesdites données collectées par le dispositif de collecte incluant la durée de cuisson effectuée à la pression de fonctionnement.

6. Système selon les revendications 3 et 5 **caractérisé en ce que** lesdites données cumulées incluent la durée cumulée de cuisson effectuée à la pression de fonctionnement, qui correspond à la somme des durées de cuisson effectuée à la pression de fonctionnement collectées à chaque utilisation de l'appareil de cuisson sous pression (1) et/ou le nombre de séquences de cuisson effectuées à la pression de fonctionnement.

7. Système selon l'une des revendications 1 à 6 **caractérisé en ce que** lesdites données collectées incluent une valeur représentative de la durée s'écoulant entre le début de l'utilisation de l'appareil de cuisson sous pression et l'atteinte de la pression de fonctionnement.

8. Système selon l'une des revendications 1 à 7 **caractérisé en ce que** ledit appareil de cuisson sous pression (1) est pourvu d'au moins un organe de commande manuel (6) mobile entre une pluralité de positions correspondant respectivement à une pluralité d'états de fonctionnement dudit appareil de cuisson sous pression (1).

9. Système selon l'une des revendications 1 à 8 **caractérisé en ce que** ledit système comprend un dispositif d'assistance à l'utilisation de l'appareil de cuisson sous pression (1) conçu pour indiquer à l'utilisateur des consignes d'utilisation de l'appareil de cuisson sous pression (1).

10. Système selon les revendications 8 et 9 **caractérisé en ce que** ledit dispositif d'assistance à l'utilisation est conçu pour indiquer à l'utilisateur dans quelle position doit être placé l'organe de commande manuel (6) en fonction de la recette que l'utilisateur souhaite mettre en oeuvre au moyen de l'appareil de cuisson sous pression (1), lesdites données collectées incluant la durée pendant laquelle la position effective de l'organe de commande manuel (6) ne correspond pas à la position indiquée par le dispositif d'assistance à l'utilisation.

11. Système selon la revendication 9 ou 10 **caractérisé en ce que** ledit dispositif d'assistance à l'utilisation de l'appareil de cuisson sous pression (1) comprend une application destinée à être exécutée par un terminal distant (12), une unité d'acquisition de données destinée à être embarquée sur ledit appareil de cuisson sous pression (1), ainsi que des moyens de télécommunication conçus pour établir une connexion sans fil (15) entre lesdits application et unité d'acquisition de données, ledit dispositif d'assistance comprenant également un moyen de surveillance conçu pour détecter une éventuelle rupture de ladite connexion sans fil (15), ladite unité d'acquisition de données étant conçue pour fonctionner selon au moins :
▪ un mode normal, qui est actif tant que ledit moyen de surveillance ne détecte pas de rupture de ladite connexion sans fil (15), et selon lequel l'unité d'acquisition de données surveille et/ou récolte et/ou génère un premier jeu de données concernant le fonctionnement de l'appareil de cuisson sous pression (1) qu'elle transmet en partie ou en totalité à l'application, grâce à ladite connexion sans fil (15), afin que ladite application utilise au moins certaines des données dudit premier jeu de données pour son exécution;
▪ un mode dégradé, qui est actif tant que ledit moyen de surveillance détecte une rupture de ladite connexion sans fil (15) et/ou un défaut d'exécution de l'application, et selon lequel l'unité d'acquisition de données (16) surveille et/ou récolte et/ou génère un deuxième jeu de données concernant le fonctionnement de l'appareil de cuisson sous pression (1) et utilise de façon autonome au moins certaines desdites données du deuxième jeu de données pour communiquer à l'utilisateur, de façon visuelle et/ou sonore, des informations relatives au fonctionnement de l'appareil de cuisson sous pression (1),
lesdites données collectées incluant la durée pendant laquelle ladite unité d'acquisition de données a fonctionné en mode dégradé.

12. Système selon l'une des revendications 1 à 11 **caractérisé en ce qu'**il comprend ledit dispositif de traitement distant (13).

13. Système selon l'une des revendications 1 à 12 **caractérisé en ce que** ledit dispositif de traitement distant (13) comprend une base de données incluant des données de références ainsi qu'un moyen de traitement conçu pour procéder à une comparaison desdites données collectées et/ou calculées pour chaque appareil de cuisson sous pression (1) avec les données de référence.

14. Système selon la revendication 13 **caractérisé en ce que** lesdites données de référence incluent des données statistiques obtenues par un traitement statistique, effectué par le dispositif de traitement distant (13), des données collectées et/ou calculées transférées par chaque appareil de cuisson sous pression (1) audit dispositif de traitement distant (13).

15. Système selon la revendication 13 ou 14 **caractérisé en ce que** le dispositif de traitement distant (13) est conçu pour envoyer un message informatif à l'utilisateur en fonction du résultat de ladite comparaison.

## Patentansprüche

1. System zum Kochen unter Druck, das mindestens ein unter Druck stehendes Kochgerät (1) umfasst, das mit einer Vorrichtung zum Sammeln von Daten (5), die an dem unter Druck stehenden Kochgerät (1) vorgesehen ist und dazu bestimmt ist, während der Verwendung des unter Druck stehenden Kochgeräts (1) Daten zu sammeln, die für den Betrieb des unter Druck stehenden Kochgeräts (1) repräsentativ sind, und einem nichtflüchtigen Speicher ausgestattet ist, der dazu bestimmt ist, Informationen zu speichern, die Daten, die von der Vorrichtung zum Sammeln von Daten gesammelt wurden und / oder die Daten einschließen, die ausgehend von den gesammelten Daten berechnet wurden, **dadurch gekennzeichnet, dass** es ebenfalls an dem unter Druck stehenden Kochgerät vorgesehen umfasst:
▪ einen Sender, der den Transfer der in dem Speicher gespeicherten Daten zu einer Vorrichtung zur Fernverarbeitung (13) sicherstellen kann, die dazu bestimmt ist, die Kompilation und die Verarbeitung der Informationen sicherzustellen,
▪ ein Mittel zur Steuerung des Senders, das dazu bestimmt ist, automatisch den Transfer der Informationen zu vorbestimmten Augenblicken und / oder als Antwort auf eine Befehlshandlung eines Benutzers auszulösen.

2. System nach Anspruch 1, **dadurch gekennzeichnet, dass** es eine Berechnungsvorrichtung umfasst, die es ermöglicht, die berechneten Daten zu erhalten.

3. System nach dem Anspruch 1 oder 2, **dadurch gekennzeichnet, dass** die berechneten Daten akkumulierte Daten einschließen, die sich aus der Akkumulierung von Daten ergeben, die von der Vorrichtung zum Sammeln bei jeder Verwendung gesammelt wurden.

4. System nach Anspruch 3, **dadurch gekennzeichnet, dass** die gesammelten Daten numerische Werte umfassen, die von der Vorrichtung zum Sammeln bei jeder Verwendung des unter Druck stehenden Kochgerätes (1) gesammelt wurden, wobei kumulierte Daten erhalten werden, indem numerische Werte zu den Werten hinzugefügt wurden, die zuvor in dem nicht-flüchtigen Speicher gespeichert wurden, um dadurch kumulierte Werte zu erhalten, die in dem nichtflüchtigen Speicher zu speichern, das System nun bestimmt ist, wobei es die vorher gespeicherten Werte ersetzt.

5. System nach einem der Ansprüche 1 bis 4, **dadurch gekennzeichnet, dass** das unter Druck stehende Kochgerät (1) mit einem Druckregelventil versehen ist, das dazu bestimmt ist, um den Druck, der in der Vorrichtung (1) herrscht, bei einem Sollwert beizubehalten, der Betriebsdruck genannt wird, wobei die Daten, die durch die Vorrichtung zum Sammeln gesammelt wurden, eine Kochzeit einschließen, die bei dem Betriebsdruck bewirkt wird.

6. System nach den Ansprüchen 3 und 5, **dadurch gekennzeichnet, dass** die kumulierten Daten die bei dem Betriebsdruck bewirkte, kumulierte Dauer des Kochen einschließen, die der bei dem Betriebsdruck bewirkten Summe der Kochzeiten, die bei jeder Verwendung des unter Druck stehenden Kochgerätes (1) gesammelt wurden, und / oder der Anzahl der bei dem Betriebsdruck bewirkten Kochfolgen entspricht.

7. System nach einem der Ansprüche 1 bis 6, **dadurch gekennzeichnet, dass** die gesammelten Daten einen Wert einschließen, der für die Dauer repräsentativ ist, die zwischen dem Beginn der Verwendung des unter Druck stehenden Kochgeräts und dem Erreichen des Betriebsdrucks verstreicht.

8. System nach einem der Ansprüche 1 bis 7, **dadurch gekennzeichnet, dass** das unter Druck stehende Kochgerät (1) mit mindestens einem manuellen Steuerorgan (6) versehen ist, das zwischen mehreren Positionen beweglich ist, die jeweils mehreren Betriebszuständen des unter Druck stehendes Kochgeräts (1) entsprechen.

9. System nach einem der Ansprüche 1 bis 8, **dadurch gekennzeichnet, dass** das System eine Vorrichtung für die Unterstützung bei der Verwendung des unter Druck stehenden Kochgeräts (1) umfasst, das dazu bestimmt ist, dem Benutzer Anweisungen zur Verwendung des unter Druck stehenden Kochgeräts (1) anzuzeigen.

10. System nach den Ansprüchen 8 und 9, **dadurch gekennzeichnet, dass** die Vorrichtung für die Unterstützung bei der Verwendung, dazu bestimmt ist, dem Benutzer anzuzeigen, in welcher Position das manuellen Steuerorgan (6) abhängig von dem Rezept, das der Benutzer mittels des unter Druck stehenden Kochgeräts (1) umsetzen möchte, platziert sein sollte, wobei die gesammelten Daten die Zeit einschließen, während der die effektive Position des manuellen Steuerorgans (6) nicht der Position entspricht, die von der Vorrichtung für die Unterstützung bei der Verwendung angezeigt wurde.

11. System nach Anspruch 9 oder 10, **dadurch gekennzeichnet, dass** die Vorrichtung für die Unterstützung bei der Verwendung des unter Druck stehenden Kochgeräts (1) eine Anwendung, die dazu bestimmt ist, durch ein entferntes Endgerät (12) ausgeführt zu werden, eine Einheit zur Erfassung von Daten, die dazu bestimmt ist, in dem unter Druck stehenden Kochgerät (1) vorgesehen zu werden, sowie Telekommunikationsmittel umfasst, die dazu bestimmt sind, eine drahtlose Verbindung (15) zwischen der Anwendung und der Einheit zur Erfassung von Daten herzustellen, wobei die Vorrichtung für die Unterstützung ferner ein Überwachungsmittel umfasst, das dazu bestimmt ist, eine mögliche Unterbrechung der drahtlosen Verbindung (15) zu erfassen, wobei die Einheit zur Erfassung von Daten dazu bestimmt ist, zu funktionieren gemäß zumindest:
▪ einem normalen Modus, der aktiv ist, solange die Überwachungseinrichtung nicht die Unterbrechung der drahtlosen Verbindung (15) erkennt, und gemäß dem die Einheit zur Erfassung von Daten einen ersten Satz von Daten in Bezug auf die Funktionsweise des unter Druck stehenden Kochgeräts (1) überwacht und / oder sammelt und / oder erzeugt, den sie vollständig oder teilweise an die Anwendung durch die drahtlose Verbindung (15) überträgt, so dass die Anwendung zumindest einige der Daten des ersten Satzes für seine Durchführung verwendet;
▪ einem verschlechtertem Modus, der aktiv ist, solange die Überwachungseinrichtung eine Unterbrechung der drahtlosen Verbindung (15) und / oder einen Ausfall der Ausführung der Anwendung erfasst, und gemäß dem die Einheit zur Erfassung von Daten (16) einen zweiten Satz von Daten in Bezug auf die Funktionsweise des unter Druck stehenden Kochgeräts (1) überwacht und / oder sammelt und / oder erzeugt und auf autonome Weise zumindest bestimmte der Daten des zweiten Satzes der Daten verwendet, um dem Benutzer auf visuelle und / oder hörbare Weise Informationen bezüglich der Funktionsweise des unter Druck stehenden Kochgeräts (1) zu kommunizieren,
wobei die gesammelten Daten die Dauer einschließen, während der die Einheit zur Erfassung von Daten im verschlechterten Modus funktioniert hat.

12. System nach einem der Ansprüche 1 bis 11, **dadurch gekennzeichnet, dass** es eine Vorrichtung zur Fernverarbeitung (13) umfasst.

13. System nach einem der Ansprüche 1 bis 12, **dadurch gekennzeichnet, dass** die Vorrichtung zur Fernverarbeitung (13) eine Datenbank, die Referenzdaten einschließt, sowie ein Mittel zur Verarbeitung umfasst, das dazu bestimmt ist, einen Vergleich der gesammelten und / oder berechneten Daten für jedes unter Druck stehendes Kochgerät (1) mit den Referenzdaten vorzunehmen.

14. System nach Anspruch 13, **dadurch gekennzeichnet, dass** die Referenzdaten statistische Daten, die durch eine statistische Verarbeitung erhalten wurden, die durch die Vorrichtung zur Fernverarbeitung (13) bewirkt wurde, gesammelte und / oder berechnete Daten einschließen, die von jedem unter Druck stehenden Kochgerät (1) an die Vorrichtung zur Fernverarbeitung (13) übertragen wurden.

15. System nach Anspruch 13 oder 14, **dadurch gekennzeichnet, dass** die Vorrichtung zur Fernverarbeitung (13) dazu bestimmt ist, eine Informationsnachricht an den Benutzer abhängig von dem Ergebnis des Vergleichs zu senden.

## Claims

1. Pressure cooking system comprising at least one pressurised cooking apparatus (1) provided with a data collection device (5) on board said pressurised cooking apparatus (1) and designed to collect, during the use of the pressurised cooking apparatus (1), data that is representative of the operation of said pressurised cooking apparatus (1) and a non-volatile memory designed to store information including said data collected by said data collection device and/or data calculated using said collected data, **characterised in that** it also comprises, on board said pressurised cooking apparatus:
- a transmitter that can transfer said information stored in said memory to a remote processing device (13) intended to compile and process said information,
- a means for controlling said transmitter intended to automatically initiate said transfer of said information at predetermined times and/or in response to a control action of a user.

2. System according to claim 1 **characterised in that** it comprises a calculation device making it possible to obtain said calculated data.

3. System according to claim 1 or 2 **characterised in that** said calculated data includes cumulative data resulting from the accumulation of the data collected by the collection device at each use.

4. System according to claim 3 **characterised in that** said collected data includes numerical values which are collected by the collection device at each use of the pressurised cooking apparatus (1), said cumulative data being obtained by adding said numerical values to values stored beforehand in said non-volatile memory, in order to obtain as such cumulative values that the system is then designed to store in the non-volatile memory as a replacement for said values stored beforehand.

5. System according to one of claims 1 to 4 **characterised in that** said pressurised cooking apparatus (1) is provided with a pressure regulator valve, designed to maintain the pressure within said apparatus (1) at a setpoint value called operating pressure, with said data collected by the collection device including the cooking duration carried out at the operation pressure.

6. System according to claims 3 and 5 **characterised in that** said cumulative data includes the cumulative duration of the cooking carried out at the operating pressure, which corresponds to the sum of the durations of the cooking carried out at the operating pressure collected at each use of the pressurised cooking apparatus (1) and/or the number of cooking sequences carried out at the operating pressure.

7. System according to one of claims 1 to 6 **characterised in that** said collected data includes a value that represents the time that elapses between the beginning of the use of the pressurised cooking apparatus and reaching the operating pressure.

8. System according to one of claims 1 to 7 **characterised in that** said pressurised cooking apparatus (1) is provided with at least one manual control member (6) that is mobile between a plurality of positions corresponding respectively to a plurality of operating states of said pressurised cooking apparatus (1).

9. System according to one of claims 1 to 8 **characterised in that** said system comprises a device for assistance in using the pressurised cooking apparatus (1) designed to indicate to the user recommendations for using the pressurised cooking apparatus (1).

10. System according to claims 8 and 9 **characterised in that** said device for assistance in using is designed to indicate to the user in what position the manual control member (6) must be placed according to the recipe that the user wants to carry out using the pressurised cooking apparatus (1), with said collected data including the duration during which the effective position of the manual control member (6) does not correspond to the position indicated by the device for the assistance in using.

11. System according to claim 9 or 10 **characterised in that** said device for assistance in using the pressurised cooking apparatus (1) comprises an application intended to be executed on a remote terminal (12), a data acquisition unit intended to be on board said pressurised cooking apparatus (1), as well as means of telecommunication designed to establish a wireless connection (15) between said applications and data acquisition unit, with said device for assistance also comprising a means for monitoring designed to detect any failure in the wireless connection (15), with said data acquisition unit designed to operate according to at least:
- a normal mode, which is active as long as the means for monitoring do not detect any rupture in said wireless connection (15), and according to which the data acquisition unit monitors and/or collects and/or generates a first set of data concerning the operation of the pressurised cooking apparatus (1) that it transmits partially or entirely to the application, using the wireless connection (15), so that said application uses at least some of the data of said first set of data for the execution thereof;
- a degraded mode, which is active as long as the means for monitoring is detecting a rupture in said wireless connection (15) and/or a fault in the execution of the application, and according to which the data acquisition unit (16) monitors and/or collects and/or generates a second set of data concerning the operation of the pressurised cooking apparatus (1) and autonomously uses at least some of said data from the second set of data to communicate to the user, in a visual and/or audible manner, information concerning the operation of the pressurised cooking apparatus (1),
with said collected data including the duration during which said data acquisition unit was operating in degraded mode.

12. System according to one of claims 1 to 11 **characterised in that** it comprises said remote processing device (13).

13. System according to one of claims 1 to 12 **characterised in that** said remote processing device (13) comprises a database that includes reference data as well as a known means of processing in order to carry out a comparison of said data collected and/or calculated for each pressurised cooking apparatus (1) with the reference data.

14. System according to claim 13 **characterised in that** said reference data includes statistical data obtained by a statistical processing, carried out by the remote processing device (13), of the data collected and/or calculated transferred by each pressurised cooking apparatus (1) to said remote processing device (13).

15. System according to claim 13 or 14 **characterised in that** the remote processing device (13) is designed to send an informative message to the user according to the results of said comparison.
